# EUROPÄISCHE PATENTANMELDUNG

(11) **EP 4 487 990 A1**
(43) Veröffentlichungstag der Anmeldung: **08.01.2025**
(21) Anmeldenummer: 24180177.8
(22) Anmeldetag: 05.06.2024
(51) Int. Cl.: B23P 21/00, B23Q 7/14, B25H 1/00, B62D 65/02, B23P 19/04

(54) **WERKZEUGSYSTEM ZUR BESTÜCKUNG VON INTERIEURBAUTEILEN MIT VERBINDERKLAMMERN SOWIE VERFAHREN ZUM WERKZEUGWECHSEL**

(30) Priorität: 03.07.2023 DE 102023117436
(71) Anmelder: Lisa Dräxlmaier GmbH, 84137 Vilsbiburg (DE)
(72) Erfinder: Selmeier, Christian, 84155 Bodenkirchen (DE); Häuplik, Dominic, 84137 Vilsbiburg (DE); Strasser, Stefan, 84036 Kumhausen (DE); Estermeier, Georg, 84494 Neumarkt-St. Veit (DE); Herrnreiter, Simon, 84160 Frontenhausen (DE)

(57) **Zusammenfassung**

Die Erfindung betrifft ein Werkzeugsystem zur Bestückung von Interieurbauteilen, insbesondere Armaturenbrettern bzw. Teilen davon, mit Verbinderklammern, wobei das Werkzeugsystem Folgendes umfasst:
- ein Werkzeug (10), das zur Aufnahme eines Interieurbauteils so eingerichtet ist, dass das Interieurbauteil mit Verbinderklammern bestückbar ist,
- eine Aushub- und Zentriereinheit (20) zur Aufnahme des Werkzeugs (10),
wobei die Aushub- und Zentriereinheit (20) Hubmittel (21) zum Anheben des Werkzeugs (10) aus einer Arbeitsstellung in eine Wechselstellung und Zentriermittel (25) zum positionsgenauen Zentrieren des Werkzeugs (10) in der Arbeitsstellung umfasst.

Ferner betrifft die Erfindung ein Verfahren zum Wechseln eines Werkzeugs eines solchen Werkzeugsystems.

## Beschreibung

### Technisches Gebiet

Die Erfindung betrifft ein Werkzeugsystem zur Bestückung von Interieurbauteilen mit Verbinderklammern. Ferner betrifft die Erfindung ein Verfahren zum Wechseln eines Werkzeugs eines solchen Werkzeugsystems.

### Stand der Technik

Für die Herstellung von Interieurbauteilen in Kraftfahrzeugen werden unterschiedliche Fertigungsmethoden eingesetzt. Häufig werden Interieurbauteile, insbesondere Armaturenbretter oder Teile davon, als Kunststoffteile durch Spritzgussverfahren hergestellt. Um solche Teile mit weiteren Bauteilen innerhalb eines Kraftfahrzeugs zu verbinden, werden unterschiedliche Verbindungselemente eingesetzt. Ein häufig eingesetztes Verbindungselement ist eine Klammer, insbesondere Gewindeklammer. Eine solche Klammer ist meist ein umgeformtes Blechteil, das auf Elemente oder Abschnitte des Kunststoffteils aufgesteckt wird und ein Gewinde trägt, mit welchem dann eine Verschraubung von weiteren Bauteilen erfolgen kann. So können die Interieurbauteile insbesondere Spritzgussteile, mit anderen Fahrzeugbauteilen gekoppelt werden. Außerdem ist es auch möglich, beispielsweise Kabelbäume und andere Elemente, mittels solcher Klammern an Interieurbauteile anzubinden. Die Gewindeklammern sind dafür gut geeignet und kostengünstig.

Um ein solches Interieurbauteil, beispielsweise ein Armaturenbrett mit entsprechenden Gewindeklammern auszustatten, werden sogenannte Klammersteckautomaten eingesetzt. Das sind Werkzeugsysteme, die speziell an das jeweilige Interieurbauteil angepasst sind, dieses positionsgenau aufnehmen und dann ermöglichen, dass über einen Roboterarm die Klammern an die entsprechenden Positionen des Interieurbauteils aufgesteckt werden können. Da es dabei auf eine hohe Positioniergenauigkeit ankommt, sind derartige Werkzeugsysteme jeweils speziell an das zu fertigende bzw. zu bestückende Interieurbauteil angepasst. Bei einer Änderung des Interieurbauteils oder einem Wechsel der Produktionslinie ist daher auch das gesamte Werkzeugsystem zum Klammerstecken zu ersetzen. Das ist aufwändig und äußerst kostenintensiv. Insbesondere wird dadurch auch die Umstellung einer Produktionslinie auf andere Fahrzeugbauteile erschwert. Ein weiterer Nachteil besteht darin, dass bei einem Ausfall des Werkzeugsystems die gesamte Produktionslinie für einen längeren Zeitraum stillgelegt ist, da das fest in die Produktionsanlage integrierte Werkzeugsystem zeitaufwändig gewartet bzw. repariert werden muss.

### Beschreibung der Erfindung

Aufgabe der Erfindung ist es daher, ein Werkzeugsystem zur Bestückung von Interieurbauteilen mit Verbinderklammern anzugeben, das die vorstehend genannten Nachteile vermeidet und insbesondere eine höhere Flexibilität bei Produktionsanlagen erreicht. Ferner ist es Aufgabe der Erfindung, ein Verfahren zum Wechseln eines Werkzeugs eines solchen Werkzeugsystems anzugeben.

Erfindungsgemäß wird diese Aufgabe im Hinblick auf das Werkzeugsystem durch den Gegenstand des Patentanspruchs 1 und im Hinblick auf die Anlage durch den Gegenstand des Patentanspruchs 14 gelöst.

So beruht die Erfindung konkret auf dem Gedanken, ein Werkzeugsystem zur Bestückung von Interieurbauteilen, insbesondere Armaturenbrettern bzw. Teilen davon, mit Verbinderklammern anzugeben, wobei das Werkzeugsystem Folgendes umfasst:
- ein Werkzeug, das zur Aufnahme eines Interieurbauteils so eingerichtet ist, dass das Interieurbauteil mit Verbinderklammern bestückbar ist, und
- eine Aushub- und Zentriereinheit zur Aufnahme des Werkzeugs,
wobei die Aushub- und Zentriereinheit Hubmittel zum Anheben des Werkzeugs aus einer Arbeitsstellung in eine Wechselstellung und Zentriermittel zum positionsgenauen Zentrieren des Werkzeugs in der Arbeitsstellung aufweist.

In Abkehr von dem bisher fest in eine Produktionsanlage integrierten Werkzeugsystem sieht die Erfindung ein Werkzeugsystem vor, bei dem das Werkzeug schnell und einfach ausgewechselt werden kann. Insbesondere vorteilhaft ist die Funktion des Werkzeugsystems, das Werkzeug in eine Arbeitsstellung überführen zu können, in welcher die Funktion des Bestückens des Interieurbauteils mit einer Verbinderklammer erfolgt. Das Werkzeug stellt eine besonders hohe Positioniergenauigkeit bei der Aufnahme von Interieurbauteilen sicher, so dass die Verbinderklammern positionsgenau aufgesteckt werden können. Dazu sind die Zentriermittel vorgesehen, auf die das Werkzeug in die Arbeitsstellung absenkbar ist. In der Arbeitsstellung ist das Werkzeug also exakt positioniert, so dass sich insofern keine Nachteile gegenüber bisher vollständig in eine Produktionsanlage integrierten Werkzeugsystemen ergibt.

Der besondere Vorteil zeigt sich jedoch in der Funktion des Werkzeugsystems, mittels der Aushubeinheit das Werkzeug in die Wechselstellung zu heben, so dass das Werkzeug die Zentriermittel verlässt und dann vorzugsweise frei beweglich ist. In der Wechselstellung kann das Werkzeug dann beispielsweise auf einen Wechselwagen überführt werden, so dass das Werkzeug sehr schnell und einfach austauschbar ist. Das erleichtert eine Wartung des Werkzeugs ohne größere Unterbrechung des Produktionsablaufs, ermöglicht den schnellen Wechsel von Produktionslinien und erhöht die Ausfallsicherheit einer Produktionsanlage für Interieurbauteile. Außerdem wird mit der Erfindung die Flexibilität an Produktionsstandorten erhöht, da durch die Möglichkeit des einfachen Werkzeugwechsels eine Produktionsanlage innerhalb kurzer Zeit auf die Produktion eines anderen Interieurbauteils bzw. einer völlig anderen Fahrzeuglinie umgestellt werden kann. So können kurzfristige Erhöhungen von Bauteilabrufen der Fahrzeughersteller gut kompensiert werden.

Im Wesentlichen ist bei der Erfindung bevorzugt vorgesehen, dass die Aushub- und Zentriereinheit ortsfest, aber demontierbar, in der Produktionslinie verbaut ist. Das eigentliche Werkzeug, das das Interieurbauteil aufnimmt und zur Bestückung mit Verbinderklammern positionsgenau hält, ist hingegen auswechselbar und kann von der Aushub- und Zentriereinheit entfernt werden.

Konkret kann bei einer bevorzugten Ausführungsform der Erfindung vorgesehen sein, dass die Aushub- und Zentriereinheit einen Hubboden zum Anheben und Absenken des Werkzeugs aufweist. Der Hubboden kann so ansteuerbar sein, dass das Werkzeug auf Zentrierstifte der Aushub- und Zentriereinheit absenkbar und der Hubboden vom Werkzeug lösbar ist. Mittels des Hubbodens kann also das Werkzeug von der Wechselstellung in die Arbeitsstellung abgesenkt werden und umgekehrt von der Arbeitsstellung in die Wechselstellung angehoben werden. Indem der Hubboden in der Arbeitsstellung des Werkzeugs zusätzlich weiter abgesenkt werden kann, wird der Kontakt zwischen dem Hubboden und dem Werkzeug gelöst, so dass das Werkzeug bestenfalls allein auf den Zentrierstiften aufliegt. Das vermeidet Positionsungenauigkeiten bzw. erhöht die Positionsgenauigkeit des Werkzeugs in der Arbeitsstellung.

Um einen schnellen und einfachen Werkzeugwechsel zu ermöglichen, ist es vorteilhaft, wenn die Aushub- und Zentriereinheit, insbesondere der Hubboden, Schienen zur Aufnahme und Übergabe des Werkzeugs an einen Wechselwagen aufweisen. Vorzugsweise sind sowohl an der Aushub- und Zentriereinheit als auch am Wechselwagen Schienen vorgesehen, die zueinander fluchtend ausrichtbar sind. Die Schienen ermöglichen es, das Werkzeug sehr einfach von der Aushub- und Zentriereinheit auf den Wechselwagen, und umgekehrt, zu überführen. Insbesondere werden Arbeitskräfte nicht durch das Gewicht des Werkzeugs belastet.

Bevorzugt ist es generell, wenn ein Wechselwagen vorgesehen ist. Der Wechselwagen kann zur Aufnahme des Werkzeugs in der Wechselstellung eingerichtet sein. Der Wechselwagen ermöglicht es, das Werkzeug aufzunehmen, wenn es durch die Hubmittel in die Wechselstellung überführt ist. Der Wechselwagen kann dann genutzt werden, um das Werkzeug in ein Lager zu überführen. Der Wechselwagen ist dazu bewegbar, insbesondere fahrbar. Bei dem Werkzeugsystem können mehrere Wechselwagen vorgesehen sein, die unterschiedliche Werkzeuge tragen, so dass ein schneller Wechsel von Werkzeugen möglich ist.

In diesem Zusammenhang ist zu erwähnen, dass Werkzeuge zum Klammerstecken durchaus komplex sind und eine Vielzahl von pneumatischen und elektrischen Bauteilen beinhalten. Das erhöht das Gewicht des Werkzeugs, wobei durch die zueinander fluchtenden Schienen an der Aushub- und Zentriereinheit und dem Wechselwagen dennoch ein einfaches und kräfteschonendes Wechseln des Werkzeugs möglich ist.

Bei einer bevorzugten Ausführungsform der Erfindung weist die Aushub- und Zentriereinheit wenigstens ein Dämpfungselement für das Werkzeug auf. Das Dämpfungselement kann einerseits einen Endanschlag für das Werkzeug bilden und außerdem dafür sorgen, dass das Werkzeug beim Auffahren auf die Aushub- und Zentriereinheit langsam gebremst wird, bevor es seine Endposition erreicht. So wird eine Beschädigung des Werkzeugs vermieden. Insofern ist es vorteilhaft, wenn das Dämpfungselement im Bereich eines Längsendes der Schienen der Aushub- und Zentriereinheit angeordnet ist.

Das Dämpfungselement weist vorzugsweise eine Vorlagerung auf. Die Vorlagerung ist insbesondere geeignet, Querkräfte aufzunehmen, die beim Lösen des Hubbodens von dem Werkzeug auftreten. Das Werkzeug, das beim Aufschieben auf die Aushub- und Zentriereinheit von dem Dämpfungselement abgebremst wird, liegt beim Absenken des Hubbodens in die Arbeitsstellung an dem Dämpfungselement, insbesondere dessen Vorlagerung, an. Wenn das Werkzeug auf den Zentriermitteln aufliegt und der Hubboden zur vollständigen Entlastung des Werkzeugs weiter abgesenkt wird, ergibt sich eine Relativbewegung zwischen Dämpfungselement und Werkzeug. Um die dabei entstehenden Querkräfte, die auf das Dämpfungselement wirken, auszugleichen, ist die Vorlagerung vorgesehen. Die Vorlagerung kann dazu auf einem Stoßdämpfer montiert, insbesondere aufgeschraubt, sein. Der Stoßdämpfer ist vorzugsweise mit dem Dämpfungselement verbunden oder bildet einen Teil des Dämpfungselements. Die Vorlagerung kann insbesondere eine Bolzenvorlagerung sein, die einen Winkelversatz zwischen ihrer Spitze und dem Dämpfungselement erlaubt. Es ist auch möglich, das die Vorlagerung eine Rolle oder eine drehbar gelagerte Kugel umfasst, die jeweils entlang eine Stirnwand des Werkzeugs abrollen, wenn sich der Hubboden von dem Werkzeug entfernt.

Ferner kann die Aushub- und Zentriereinheit, insbesondere im Bereich eines Längsendes der Schienen, wenigstens einen Abstandssensor zur Erfassung einer Position des Werkzeugs auf der Aushub- und Zentriereinheit aufweisen. Mittels des Abstandssensors kann sichergestellt werden, dass sich das Werkzeug in der Wechselstellung an der richtigen Position befindet, sodass die Zentriermittel beim Absenken des Werkzeugs in die Arbeitsstellung entsprechende Zentrieröffnungen des Werkzeugs gut treffen und die Zentriermittel insbesondere nicht beschädigt werden.

Besonders bevorzugt ist es, wenn zwei parallel angeordnete Abstandssensoren vorgesehen sind. Das Werkzeug kann eine zu wenigstens einem der Abstandssensoren korrespondierende Öffnung aufweisen. Dabei können die Abstandssensoren mit einer Steuerung so signalverbunden sein, dass eine korrekte Ausrichtung und Position des Werkzeugs auf der Aushub- und Zentriereinheit in der Wechselstellung detektierbar ist. Durch die zwei parallel angeordneten Abstandssensoren ist nicht nur erkennbar, ob sich das Werkzeug in der richtigen Position befindet. Insbesondere in Verbindung mit der Öffnung am Werkzeug kann auch ermittelt werden, ob das Werkzeug mit der richtigen Ausrichtung auf die Aushub- und Zentriereinheit aufgeschoben wurde. Die Abstandssensoren können als Induktionssensoren ausgebildet sein.

Das Werkzeug kann zwei Stirnseiten haben, die in einer Bewegungsrichtung des Werkzeugs, welche parallel zu den Schienen der Aushub- und Zentriereinheit verläuft, gegenüberliegend angeordnet sind. Mit anderen Worten kann das Werkzeug eine in Bewegungsrichtung vordere und eine in Bewegungsrichtung hintere Stirnseite aufweisen. Auf einer der Stirnseiten ist vorzugsweise die zu einem der Abstandssensoren korrespondierende Öffnung angeordnet. Die Öffnung kann dabei insbesondere als Sackloch ausgebildet sein. Es kann sich aber auch um eine Durchgangsöffnung in einer stirnseitigen Wand des Werkzeugs handeln. Wenn beispielsweise ein Abstandssensor erkennt, dass ein vorbestimmter Abstand zwischen dem Werkzeug und dem Abstandssensor besteht und gleichzeitig der andere Abstandssensor einen höheren Abstand erfasst, weil er auf die Öffnung gerichtet ist, so kann von einer korrekten Position und Ausrichtung des Werkzeugs ausgegangen werden. Zeigen jedoch beide Abstandssensoren den vorbestimmten Abstand an, dann ist das Werkzeug fehlerhaft ausgerichtet und sollte um 180 Grad um eine Hochachse verdreht erneut auf die Aushub- und Zentriereinheit geschoben werden.

Das Hubmittel zum Anheben des Werkzeugs aus einer Arbeitsstellung in eine Wechselstellung umfasst bei einer bevorzugten Ausführungsform der Erfindung wenigstens einen Hubzylinder und eine parallel dazu angeordnete Führung. Der Hubzylinder kann beispielsweise ein Hydraulikzylinder und/oder ein pneumatischer Zylinder sein. Derartige Hubzylinder haben oft eine eingeschränkte Positioniergenauigkeit. Um dennoch ein verschwenkungsfreies und positionsgenaues Anheben und Absenken zu erzielen, ist zusätzlich vorzugsweise eine Führung vorgesehen. Die Führung kann als Linearführung ausgebildet sein und insbesondere mehrere Linearkugellager umfassen. Die Linearführung stellt eine lineare Bewegung des Hubmittels sicher, so dass auch das Werkzeug gegenüber der Aushub- und Zentriereinheit eine exakt lineare Bewegung vollführt.

Die Aushub- und Zentriereinheit sowie das Werkzeug weisen vorzugsweise jeweils eine einheitliche Schnittstelle zur elektrischen und pneumatischen Verbindung auf. Für das Klammerstecken sind oft mehrere pneumatische und elektrische Bauteile im Werkzeug integriert. Um diese Bauteile anzusteuern, benötigt es eine elektrische und pneumatische Verbindung des Werkzeugs mit entsprechenden Quellen, was üblicherweise durch Steckanschlüsse erfolgt. Damit der Werkzeugwechsel möglichst einfach und schnell vollzogen werden kann, ist daher bevorzugt vorgesehen, dass die Aushub- und Zentriereinheit als Quelle einerseits und das Werkzeug als Empfänger andererseits jeweils einen einheitlichen Anschluss aufweisen, der pneumatische und elektrische Verbindungen miteinander kombiniert.

So kann an der Aushub- und Zentriereinheit ein Verbindungskabel mit pneumatischen und elektrischen Verbindungsleitungen vorgesehen sein, das über eine einzige Steckverbindung mit dem Werkzeug gekoppelt werden kann. Zum Werkzeugwechsel wird also das Werkzeug zunächst mittels eines einzigen Steckers von der Aushub- und Zentriereinheit elektrisch und pneumatisch getrennt. Dann kann das Werkzeug in die Wechselstellung angehoben und auf einen Wechselwagen aufgeschoben werden. Das neue Werkzeug kann in umgekehrter Reihenfolge dann über den Wechselwagen an die Aushub- und Zentriereinheit herangefahren, über die miteinander fluchtenden Schienen auf die Aushub- und Zentriereinheit aufgeschoben und anschließend mittels des Hubmittels auf Zentrierstifte der Aushub- und Zentriereinheit abgesenkt werden. Anschließend erfolgt über den einzigen Anschluss das Anstecken des Verbindungskabels der Aushub- und Zentriereinheit an das Werkzeug, so dass mit einem manuellen Steckvorgang alle elektrischen und pneumatischen Verbindungen zwischen der Aushub- und Zentriereinheit und dem Werkzeug hergestellt sind.

Um das Werkzeug entweder auf der Aushub- und Zentriereinheit und/oder dem Wechselwagen zu sichern und insbesondere zu verhindern, dass sich das Werkzeug entlang der Schienen unbeabsichtigt bewegt, kann das Werkzeug und/oder die Aushub- und Zentriereinheit wenigstens ein bewegliches, insbesondere federbelastetes, Verriegelungselement zur Verriegelung des Werkzeugs auf der Aushub- und Zentriereinheit und/oder auf dem Wechselwagen aufweisen. So kann das Werkzeug beispielsweise nach dem Aufschieben auf die Aushub- und Zentriereinheit mit dem Verriegelungselement gesichert werden, bevor es mittels der Hubmittel auf die Zentriermittel der Aushub- und Zentriereinheit abgesenkt wird. Das vermeidet zusätzlich, dass sich das Werkzeug beim Absenken verschiebt und ggf. die Zentriermittel nicht korrekt trifft.

Bei einer weiteren bevorzugten Ausführungsform der Erfindung umfasst die Aushub- und Zentriereinheit einen Aushubteil mit den Hubmitteln und dem Hubboden und einen Zentrierteil mit den Zentriermitteln. Wenigstens der Hubboden, insbesondere der gesamte Aushubteil, ist vorzugsweise in zwei um 180 Grad um eine Hochachse verdrehten Positionen auf dem Zentrierteil anordenbar. Indem der Aushubteil, wenigstens jedoch der Hubboden, in zwei unterschiedlichen Positionen auf dem Zentrierteil anordenbar, insbesondere montierbar ist, kann die Aushub- und Zentriereinheit so in eine Produktionsanlage integriert werden, dass ein Werkzeugwechsel zu verschiedenen Seiten möglich ist. Wenn der Hubboden in der ersten Position auf dem Zentrierteil angeordnet ist, kann ein Werkzeug beispielsweise von links auf die Aushub- und Zentriereinheit geschoben werden, wogegen ein Aufschieben von rechts ermöglicht ist, wenn der Hubboden in der zweiten Position auf dem Zentrierteil angeordnet ist.

Für eine hohe Flexibilität bei der Produktion von Interieurbauteilen hat es sich ferner als vorteilhaft erwiesen, wenn mehrere Werkzeuge für unterschiedliche Interieurbauteile vorgesehen sind, die mit einer Aushub- und Zentriereinheit und wenigstens einem Wechselwagen zum Werkzeugwechsel zusammenwirken. Insbesondere können in einem Lager mehrere unterschiedliche Werkzeuge vorgesehen sein, die unterschiedliche Interieurbauteile zum Bestücken mit Verbinderklammern aufnehmen können. Je nach Art der Produktionsanforderung kann das jeweils geforderte Werkzeug mittels eines Wechselwagens aus dem Lager an die Produktionsanlage gefahren werden. Dort wird das Werkzeug auf die Aushub- und Zentriereinheit aufgefahren, wobei sich die Aushub- und Zentriereinheit in einer Wechselstellung befindet. Nach dem Aufschieben und Verriegeln des Werkzeugs auf der Aushub- und Zentriereinheit wird die Aushub- und Zentriereinheit in die Arbeitsstellung abgesenkt, wobei sich das Werkzeug über die Zentriermittel exakt positioniert. Sobald das Werkzeug dann pneumatisch und elektrisch in die Produktionsanlage eingebunden ist, kann die Bestückung des Interieurbauteils, für welches das Werkzeug vorgesehen ist, beginnen.

Nach einem nebengeordneten Aspekt betrifft die Erfindung ferner ein Verfahren zum Wechseln eines Werkzeugs eines Werkzeugsystems, insbesondere eines zuvor erläuterten Werkzeugsystems, wobei das Verfahren die folgenden Schritte umfasst:
- Anheben eines Hubbodens durch Hubmittel einer Aushub- und Zentriereinheit in eine Wechselstellung,
- Aufschieben eines Werkzeugs auf den Hubboden,
- Detektieren der Ausrichtung und Position des Werkzeugs auf der Aushub- und Zentriereinheit mittels Abstandssensoren,
- Positionieren des Werkzeugs in einem vorbestimmten Abstand zu den Abstandssensoren,
- Verriegeln des Werkzeugs auf dem Hubboden,
- Absenken des Hubbodens mittels der Hubmittel, bis das Werkzeug auf den Zentriermitteln angeordnet ist, und
- weiteres Absenken des Hubbodens zur vollständigen Entlastung des Werkzeugs.

Insbesondere die vollständige Entlastung des Werkzeugs durch das weitere Absenken des Hubbodens stellt eine hohe Zentriergenauigkeit sicher.

Bei dem erfindungsgemäßen Verfahren kann vorgesehen sein, das das Aufschieben des Werkzeugs durch wenigstens ein Dämpfungselement abgebremst bzw. gestoppt wird. Die Dämpfungselemente können zum oder durch das Verriegeln des Werkzeugs auf dem Hubboden auch vorgespannt werden, so dass eine hohe Positionsstabilität des Werkzeugs auf der Aushub- und Zentriereinheit gewährleistet ist.

Bevorzugt ist es, wenn nach dem Anheben des Hubbodens und vor dem Aufschieben des Werkzeugs ein zuvor eingesetztes Werkzeug von dem Hubboden entfernt, insbesondere auf einen Wechselwagen geschoben, wird.

Die im Zusammenhang mit dem zuvor beschriebenen Werkzeugsystem genannten Vorteile und bevorzugten Weiterbildungen gelten analog auch für das Verfahren.

### Kurze Beschreibung der Zeichnungen

Die oben beschriebenen, unterschiedlichen und beispielhaften Merkmale können erfindungsgemäß miteinander kombiniert werden, soweit dies technisch sinnvoll und geeignet ist. Dies gilt unabhängig davon, ob die jeweiligen Merkmale als Vorrichtungs- und/oder Verfahrensmerkmale offenbart sind. Weitere Merkmale, Vorteile und Ausführungsformen der Erfindung ergeben sich aus der nachfolgenden Figurenbeschreibung sowie dem in den beigefügten, schematischen Zeichnungen dargestellten Ausführungsbeispiel. In diesen zeigen
- Fig. 1: eine perspektivische Ansicht eines Werkzeugs und einer Aushub- und Zentriereinheit des erfindungsgemäßen Werkzeugsystems, wobei sich das Werkzeug in der Arbeitsstellung befindet;
- Fig. 2: eine perspektivische Ansicht der Aushub- und Zentriereinheit des Werkzeugsystems gemäß Fig. 1;
- Fig. 3: eine perspektivische Ansicht eines optionalen Wechselwagens des Werkzeugsystems gemäß Fig. 1;
- Fig. 4: eine Detaildarstellung der Hubmittel der Aushub- und Zentriereinheit des Werkzeugsystems gemäß Fig. 1; und
- Fig. 5: eine Detaildarstellung eines Schienen-Endbereichs der Aushub- und Zentriereinheit gemäß Fig. 1.

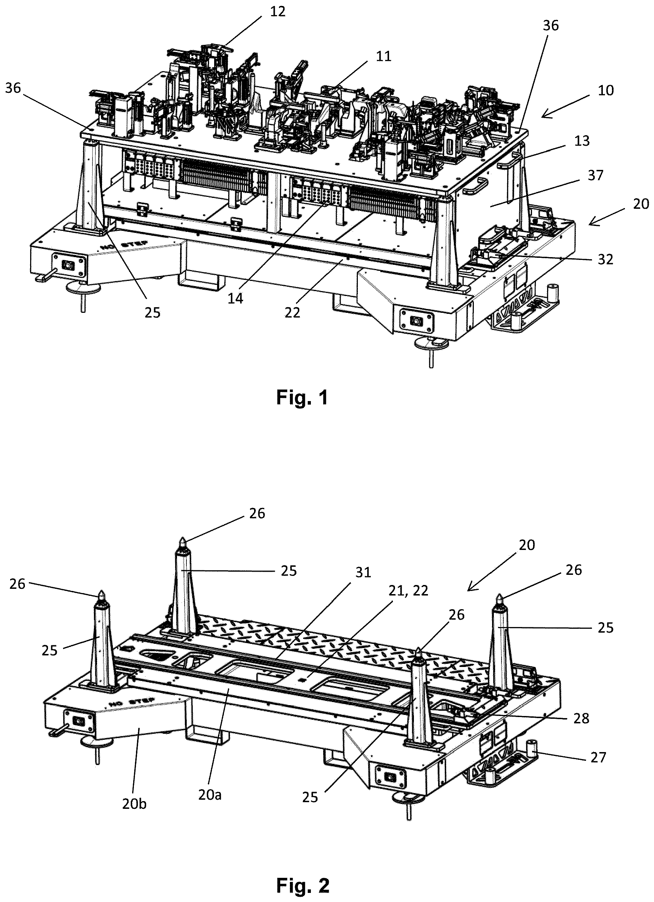

In Fig. 1 ist ein Werkzeug 10 des Werkzeugsystems gezeigt, das zur Aufnahme eines Interieurbauteils eingerichtet ist, sodass das Interieurbauteil mit Verbinderklammern bestückbar ist. Bei dem hier dargestellten Werkzeug 10 sind mehrere Aufnahmen 11 für das Interieurbauteil und Schiebeeinheiten 12 zum Aufstecken der Verbinderklammern vorgesehen. Das Werkzeug kann über die Aufnahmen 11 ein Interieurbauteil, beispielsweise ein Armaturenbrett, positionsgenau aufnehmen. Die Schiebeeinheiten 12 können mit Verbindungsklammern bestückt werden und dann die Verbindungsklammern an vorbestimmte Positionen des Interieurbauteils fixieren. Das Werkzeug 10 kann auch ohne Schiebeeinheiten 12 ausgestattet sein. Die Bestückung des Interieurbauteils mit Verbinderklammern kann dann beispielsweise durch einen kollaborierenden Roboter, einen sogenannten "Cobot", erfolgen, der außerhalb des Werkzeugs 10 angeordnet ist.

Wie in Fig. 1 erkennbar ist, umfasst das Werkzeug 10 zur Ansteuerung der Schiebereinheiten 12 umfangreiche Elektronikkomponenten 14. Außerdem können mehrere Pneumatikkomponenten vorgesehen sein. Diese sind in einen boxartigen Körper des Werkzeugs 10 integriert.

Das Werkzeugsystem umfasst außerdem eine Aushub- und Zentriereinheit 20, auf die das Werkzeug 10 in seiner Arbeitsstellung gemäß Fig. 1 abgesenkt ist. Die Aushub- und Zentriereinheit 20 umfasst insbesondere Zentriermittel 25, die eine hochgenaue Positionierung des Werkzeugs 10 auf der Aushub- und Zentriereinheit 20 bewirken.

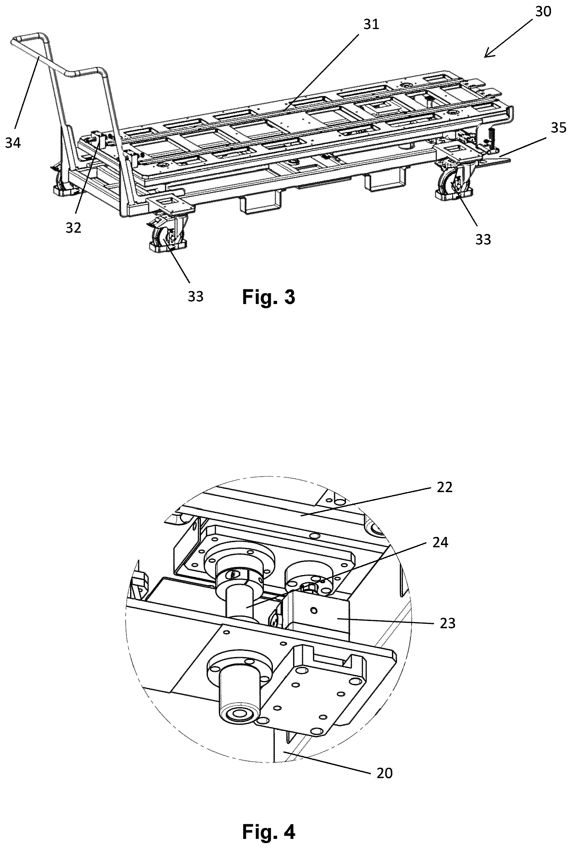

Wie in Fig. 2 gut erkennbar ist, weisen die Zentriermittel 25 der Aushub- und Zentriereinheit 20 jeweils einen Zentrierstift 26 auf. Der Zentrierstift 26 kann mit entsprechenden Zentrieröffnungen 36 am Werkzeug 10 zusammenwirken, um das Werkzeug 10 positionsgenau auf der Aushub- und Zentriereinheit 20 zu zentrieren. Die Aushub- und Zentriereinheit 20 weist ferner Hubmittel 21 auf, wobei die Hubmittel 21 insbesondere einen Hubboden 22 sowie einen Hubzylinder 23 und eine Führung 24 (Fig. 4) umfassen. Der Hubboden 22 trägt Schienen 31, wobei am Werkzeug 10 entsprechende Schienenräder vorgesehen sind, so dass das Werkzeug 10 auf den Schienen 31 verfahrbar ist.

Um sicherzustellen, dass das Werkzeug 10 an der korrekten Position der Aushub- und Zentriereinheit 20 angeordnet ist, sind jeweils an einem Ende der Schienen 31 Dämpfungselemente 28 vorgesehen. Die Dämpfungselemente 28 können Druckfedern aufweisen, um eine entsprechende Dämpfung beim Auffahren des Werkzeugs 10 auf die Aushub- und Zentriereinheit 20 bewirken.

Die Aushub- und Zentriereinheit 20 ist funktional in einen Aushubteil 20a und einen Zentrierteil 20b unterteilbar. Der Aushubteil 20a umfasst die Hubmittel 21 und den Hubboden 22 und dient zum Anheben und Absenken des Werkzeugs. Der Hubboden 22 umfasst die Schienen 31, die Dämpfungselemente 28 und Abstandssensoren 29, auf die später näher eingegangen wird. Der Zentrierteil 20b umfasst die Zentriermittel 25 mit den Zentrierstiften 26 und dient zum zentrierten Halten des Werkzeugs 10 in der Arbeitsstellung.

Der Aushubteil 20a, zumindest dessen Hubboden 22, ist von dem Zentrierteil 20b trennbar. Insbesondere können der Aushubteil 20a oder der Hubboden 22 von dem Zentrierteil 20b demontierbar und in einer um 180 um eine Hochachse verdrehten Position wieder montierbar sein. So können Werkzeuge 10 von unterschiedlichen Seiten auf die Aushub- und Zentriereinheit 20 aufgeschoben werden.

Teil des Werkzeugsystems kann optional ein Wechselwagen 30 sein, der in Fig. 3 dargestellt ist. Der Wechselwagen 30 umfasst eine Plattform mit Schienen 31. Um den Wechselwagen 30 fahren zu können, sind Räder 33 und ein Griff 34 vorgesehen. Die Schienen 31 am Wechselwagen 30 umfassen jeweils an einem Ende einen Dämpfungsanschlag 32. Die Dämpfungsanschläge 32 können dämpfend ausgelegt sein, also beispielsweise entsprechende Druckfedern aufweisen. Die Schienen 31 des Wechselwagens 30 sind so gestaltet und ausgerichtet, dass sie an die Schienen 31 der Aushub- und Zentriereinheit 20 fluchtend anlegbar sind, so dass das Werkzeug 10 von der Aushub- und Zentriereinheit 20 auf den Wechselwagen 30 und umgekehrt verschoben werden kann.

Fig. 4 zeigt im Detail die Hubmittel 21 der Aushub- und Zentriereinheit 20. Die Hubmittel 21 sind an der Aushub- und Zentriereinheit 20 fest montiert und mit dem Hubboden 22 gekoppelt. Konkret sind ein Hubzylinder 23 und eine Führung 24 vorgesehen, wobei die Führung 24 parallel zum Hubzylinder 23 positioniert ist.

Der Hubzylinder 23 ermöglicht es, den Hubboden 22 anzuheben und abzusenken. Dabei ist der Verfahrweg des Hubzylinders 23 so bemessen, dass der Hubboden 22 so weit anhebbar ist, dass das Werkzeug 10 außer Eingriff mit den Zentrierstiften 26 gelangt, also frei von den Zentrierstiften 26 ist. Umgekehrt kann der Hubzylinder 23 den Hubboden 22 so weit absenken, dass das Werkzeug 10 auf die Zentrierstifte 26 absenkbar ist. Der Hubzylinder 23 kann den Hubboden 22 darüber hinaus weiter absenken, so dass der Hubzylinder 23 etwa 5 mm unterhalb des Werkzeugs 10 positioniert werden kann. Damit ist sichergestellt, dass der Hubboden 22 in der Arbeitsstellung des Werkzeugs 10 keinen Kontakt zum Werkzeug 10 hat. Das verhindert, dass der Hubboden 22 die Position des Werkzeugs 10 in der Arbeitsstellung beeinflusst.

Beim weiteren Absenken des Hubbodens 22 ergibt sich eine Relativbewegung zwischen den Dämpfungselementen 28 und einer Stirnseite 37 des Werkzeugs 10. Um eine Beschädigung der Dämpfungselemente 28 zu vermeiden, besitzen diese jeweils Vorlagerungen 28a, insbesondere in Form von Bolzenvorlagerungen. Die Vorlagerungen 28a erlauben eine Kipp- bzw. Schwenkbewegung, so dass sich beim weiteren Absenken des Hubbodens 22 ein Winkel zwischen der Spitze der jeweiligen Vorlagerung 28a und dem Dämpfungselement 28 ergibt. Das Dämpfungselement 28 wird auf diese Weise von Querkräften entlastet.

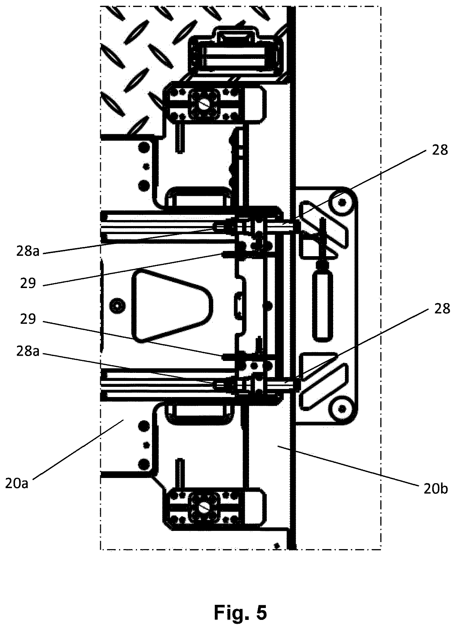

Fig. 5 zeigt die Vorlagerungen 28a an den Dämpfungselementen 28. Ferner ist erkennbar, dass parallel zu den Dämpfungselementen 28 Abstandssensoren 29 angeordnet sind. Konkret sind zwei Abstandsensoren 29 vorgesehen, die vorzugsweise als Induktionssensoren ausgebildet sind. Die Abstandssensoren 29 sind vorzugsweise derart angesteuert, dass sie eine korrekte Position des Werkzeugs 10, d.h. die Lage des Werkzeugs 10 in Bezug auf den Abstand zu den Abstandssensoren 29 in horizontaler Richtung, erkennen. Ferner können die Abstandssensoren 29 so angesteuert sein, dass sie eine korrekte Ausrichtung des Werkzeugs 10 erkennen. Unter einer korrekten Ausrichtung wird die räumliche Ausrichtung des Werkzeugs 10 in Bezug auf die Aushub- und Zentriereinheit 20 verstanden. So ist bei dem hier dargestellten Ausführungsbeispiel das Werkzeug 10 korrekt ausgerichtet, wenn die Stirnseite 37 zu den Abstandssensoren 29 bzw. den Dämpfungselementen 28 weist. Weist die Stirnseite 37 jedoch in die entgegengesetzte Richtung, ist das Werkzeug 10 fehlerhaft ausgerichtet.

Um die korrekte Ausrichtung des Werkzeugs 10 erfassen, kann an der Stirnseite 37 in einem Bereich, der einem der Abstandssensoren 39 gegenüberliegt, eine Öffnung ausgebildet sein. Wenn nun der entsprechende, erste Abstandssensor 39 aufgrund der Öffnung keinen oder einen überhöhten Abstand erfasst, während der andere, zweite Abstandssensor 39 einen vorbestimmten Abstand für die korrekte Werkzeugposition detektiert, dann liegt eine korrekte Position und Ausrichtung des Werkzeugs 10 vor. Falls der zweite Abstandssensor 39 einen Abstand erfasst, der über dem vorbestimmten Abstand für die korrekte Werkzeugposition liegt, und der erste Abstandssensor 39 weiterhin keinen oder einen abweichend zu großen Abstand erfasst, dann ist das Werkzeug zwar korrekt ausgerichtet, aber noch an der falschen Position. Erfassen beide Abstandssensoren 29 den vorbestimmten Abstand für die korrekte Werkzeugposition, so befindet sich das Werkzeug 10 in der korrekten Position, ist aber fehlerhaft ausgerichtet. In diesem Fall sollte das Werkzeug 10 von den Schienen 31 heruntergefahren, um 180 Grad um eine Hochachse gedreht und wieder in korrekter Ausrichtung auf die Schienen 31 aufgefahren werden.

Das Wechseln eines Werkzeugs 10 mit dem erfindungsgemäßen Werkzeugsystem kann wie folgt durchgeführt werden:
Zunächst wird das Werkzeug 10 auf den Wechselwagen 30 aufgefahren, wobei das Werkzeug 10 mittels der Schienenräder über die Schienen 31 bis zu den Endanschlägen 32 geschoben wird. Das Werkzeug 10 kann dafür entsprechende Handgriffe 13 aufweisen, um ein manuelles Bewegen des Werkzeugs 10 zu erleichtern. Sobald das Werkzeug 10 an den Endanschlägen 32 anliegt, kann es auf einer gegenüberliegenden Seite mittels eines Verriegelungselements, beispielsweise in Form eines federbelasteten Bolzens, am Wechselwagen 30 verriegelt werden. Dabei kann der Wechselwagen 30 eine entsprechende Rastaufnahme für das Verriegelungselement umfassen, wobei dieses so gestaltet sein kann, dass das Verriegelungselement aufgrund seiner Federbelastung automatisch in der Rastaufnahme verrastet. Das Werkzeug 10 ist so auf dem Wechselwagen 30 gesichert.

Der Wechselwagen 30 kann dann an die Produktionsanlage, insbesondere an die Aushub- und Zentriereinheit 20 gefahren werden. Dazu können Arbeitskräfte den Wechselwagen 30 am Griff 34 greifen und über die drehbeweglich angelenkten Räder 33 an die jeweilige Position schieben. Der Wechselwagen 30 wird vorzugsweise unmittelbar fluchtend zu den Schienen 31 der Aushub- und Zentriereinheit 20 an der Aushub- und Zentriereinheit 20 positioniert. Dazu sind die Zentrierelemente 27, 35 vorgesehen, die eine genaue Positionierung des Wechselwagens 30 an der Aushub- und Zentriereinheit 20 bewirken.

Die Zentrierelemente 27,35 umfassen insbesondere Zentrierbolzen 27, die an der Aushub- und Zentriereinheit 20 angeordnet sind. Der Wechselwagen 30 weist dazu korrespondierende Zentrierführungen 35 auf, die vorzugsweise ein V-förmige Aufnahme bilden. Die Zentrierführungen 37 können jeweils einen Zentrierbolzen 27 umgreifen, wobei der Zentrierbolzen 27 entlang der V-förmigen Aufnahme der Zentrierführung 35 gleitet und so bei Annäherung des Wechselwagens 30 an die Aushub- und Zentriereinheit 20 dafür sorgt, dass die Schienen 31 fluchtend zueinander ausgerichtet werden.

Anschließend kann das Verriegelungselement, das das Werkzeug 10 am Wechselwagen 30 verriegelt, gelöst werden Das Werkzeug 10 ist dann von den Schienen 31 des Wechselwagens auf die Schienen 31 der Aushub- und Zentriereinheit 20, insbesondere des Hubbodens 22 verschiebbar. Der Hubboden 22 befindet sich dabei in der angehobenen Stellung, so dass beim Aufschieben des Werkzeugs 10 auf den Hubboden 22 das Werkzeug 10 über die Zentriermittel 25, insbesondere die Zentrierstifte 26, geschoben werden kann. Sobald die Endanschläge 32 am Hubboden 22 erreicht sind, wird das Werkzeug 10 mit dem Verriegelungselement am Hubboden 22 verriegelt.

Anschließend kann der Hubboden 22 abgesenkt werden, wobei sich das Werkzeug 10 mit den Zentrieröffnungen 36 auf die Zentrierstifte 26 absenkt und dabei zentriert auf die vorbestimmte Position geführt wird. Sobald das Werkzeug 10 vollständig auf den Zentriermitteln 25 aufliegt, wird der Hubboden 22 weiter abgesenkt, vorzugsweise bis etwa 5 mm unterhalb des Werkzeugs 10. Nun ist das Werkzeug 10 in der Arbeitsstellung und kann zur Bestückung eines Interieurbauteils mit Verbinderklammern verwendet werden.

### BEZUGSZEICHENLISTE

- 10: Werkzeug
- 11: Aufnahme
- 12: Schiebereinheit
- 13: Handgriff
- 14: Elektronikkomponente

- 20: Aushub- und Zentriereinheit
- 20a: Aushubteil
- 20b: Zentrierteil
- 21: Hubmittel
- 22: Hubboden
- 23: Hubzylinder
- 24: Führung
- 25: Zentriermittel
- 26: Zentrierstift
- 27: Zentrierbolzen
- 28: Dämpfungselement
- 28a: Vorlagerung
- 29: Abstandssensor

- 30: Wechselwagen
- 31: Schiene
- 32: Dämpfungsanschlag
- 33: Rad
- 34: Griff
- 35: Zentrierführungen
- 36: Zentrieröffnung
- 37: Stirnseite

## Patentansprüche

1. Werkzeugsystem zur Bestückung von Interieurbauteilen, insbesondere Armaturenbrettern bzw. Teilen davon, mit Verbinderklammern, wobei das Werkzeugsystem Folgendes umfasst:
- ein Werkzeug (10), das zur Aufnahme eines Interieurbauteils so eingerichtet ist, dass das Interieurbauteil mit Verbinderklammern bestückbar ist, und
- eine Aushub- und Zentriereinheit (20) zur Aufnahme des Werkzeugs (10),
wobei die Aushub- und Zentriereinheit (20) Hubmittel (21) zum Anheben des Werkzeugs (10) aus einer Arbeitsstellung in eine Wechselstellung und Zentriermittel (25) zum positionsgenauen Zentrieren des Werkzeugs (10) in der Arbeitsstellung aufweist.

2. Werkzeugsystem nach Anspruch 1
**dadurch gekennzeichnet, dass**
die Aushub- und Zentriereinheit (20) einen Hubboden (22) zum Anheben und Absenken des Werkzeugs (10) aufweist, der so ansteuerbar ist, dass das Werkzeug (10) auf Zentrierstifte (26) der Aushub- und Zentriereinheit (20) absenkbar und der Hubboden (22) vom Werkzeug (10) lösbar ist.

3. Werkzeugsystem nach Anspruch 1 oder 2
**dadurch gekennzeichnet, dass**
die Aushub- und Zentriereinheit (20), insbesondere der Hubboden (22), Schienen (31) zur Aufnahme und Übergabe des Werkzeugs (10) an einen Wechselwagen (30) aufweist.

4. Werkzeugsystem nach einem der vorhergehenden Ansprüche
**dadurch gekennzeichnet, dass**
ein Wechselwagen (30) zur Aufnahme des Werkzeugs (10) in der Wechselstellung vorgesehen ist.

5. Werkzeugsystem nach Anspruch 4
**dadurch gekennzeichnet, dass**
im Bereich eines Längsendes der Schienen (31) der Aushub- und Zentriereinheit (20) wenigstens ein Dämpfungselement (28) für das Werkzeug (10) angeordnet ist.

6. Werkzeugsystem nach Anspruch 5
**dadurch gekennzeichnet, dass**
das Dämpfungselement (28) eine Vorlagerung (28a) zur Aufnahme von Querkräften beim Lösen des Hubbodens (22) von dem Werkzeug (10) aufweist.

7. Werkzeugsystem nach einem der vorhergehenden Ansprüche
**dadurch gekennzeichnet, dass**
die Aushub- und Zentriereinheit (20), insbesondere im Bereich eines Längsendes der Schienen (31), wenigstens einen Abstandssensor (29) zur Erfassung einer Position des Werkzeugs (10) auf der Aushub- und Zentriereinheit (20) aufweist.

8. Werkzeugsystem nach Anspruch 7
**dadurch gekennzeichnet, dass**
zwei parallel angeordnete Abstandssensoren (29) vorgesehen sind und das Werkzeug (10) eine zu wenigstens einem der Abstandssensoren (29) korrespondierende Öffnung aufweist, wobei die Abstandssensoren (29) mit einer Steuerung so signalverbunden sind, dass eine korrekte Ausrichtung und Position des Werkzeugs (10) auf der Aushub- und Zentriereinheit (20) in der Wechselstellung detektierbar ist.

9. Werkzeugsystem nach einem der vorhergehenden Ansprüche
**dadurch gekennzeichnet, dass**
die Hubmittel (21) zum Anheben des Werkzeugs (10) aus einer Arbeitsstellung in eine Wechselstellung wenigstens einen Hubzylinder (23) und eine parallel dazu angeordnete Führung (24) aufweisen.

10. Werkzeugsystem nach einem der vorhergehenden Ansprüche
**dadurch gekennzeichnet, dass**
die Aushub- und Zentriereinheit (20) und das Werkzeug (10) jeweils eine einheitliche Schnittstelle zur elektrischen und pneumatischen Verbindung aufweisen.

11. Werkzeugsystem nach einem der vorhergehenden Ansprüche
**dadurch gekennzeichnet, dass**
das Werkzeug (10) und/oder die Aushub- und Zentriereinheit (20) wenigstens ein bewegliches, insbesondere federbelastetes, Verriegelungselement zur Verriegelung des Werkzeugs (10) auf der Aushub- und Zentriereinheit (20) und/oder auf dem Wechselwagen (30) aufweist.

12. Werkzeugsystem nach einem der vorhergehenden Ansprüche
**dadurch gekennzeichnet, dass**
die Aushub- und Zentriereinheit (20) einen Aushubteil (20a) mit den Hubmitteln (22) und dem Hubboden (22) und einen Zentrierteil (20b) mit den Zentriermitteln (25) umfasst, wobei wenigstens der Hubboden (22), insbesondere der Aushubteil (20a), in zwei um 180 Grad um eine Hochachse verdrehten Positionen auf dem Zentrierteil (20b) anordenbar ist.

13. Werkzeugsystem nach einem der vorhergehenden Ansprüche
**dadurch gekennzeichnet, dass**
mehrere Werkzeuge (10) für unterschiedliche Interieurbauteile vorgesehen sind, die mit einer Aushub- und Zentriereinheit (20) und wenigstens einem Wechselwagen (30) zum Werkzeugwechsel zusammenwirken.

14. Verfahren zum Wechseln eines Werkzeugs eines Werkzeugsystems, insbesondere eines Werkzeugsystems nach einem der vorhergehenden Ansprüche, umfassend die folgenden Schritte:
- Anheben eines Hubbodens (22) durch Hubmittel (21) einer Aushub- und Zentriereinheit (20) in eine Wechselstellung,
- Aufschieben eines Werkzeugs (10) auf den Hubboden (22),
- Detektieren der Ausrichtung und Position des Werkzeugs (10) auf der Aushub- und Zentriereinheit mittels Abstandssensoren (31),
- Positionieren des Werkzeugs (10) in einem vorbestimmten Abstand zu den Abstandssensoren (31),
- Verriegeln des Werkzeugs (10) auf dem Hubboden (22),
- Absenken des Hubbodens (10) mittels der Hubmittel (21), bis das Werkzeug (10) auf den Zentriermitteln (31) angeordnet ist, und
- Weiteres Absenken des Hubbodens (10) zur vollständigen Entlastung des Werkzeugs (10).

15. Verfahren nach Anspruch 14, wobei nach dem Anheben des Hubbodens (22) und vor dem Aufschieben des Werkzeugs (10) ein zuvor eingesetztes Werkzeug (10) von dem Hubboden (22) entfernt, insbesondere auf einen Wechselwagen (30) geschoben, wird.
